Europäisches Patentamt

European Patent Office

Office européen des brevets

(19)

(11) Veröffentlichungsnummer: **0 391 147**
**A2**

(12) # EUROPÄISCHE PATENTANMELDUNG

(21) Anmeldenummer: 90105395.9

(22) Anmeldetag: 22.03.90

(51) Int. Cl.⁵: **C08F 4/40**

(30) Priorität: 24.03.89 DE 3909790

(43) Veröffentlichungstag der Anmeldung:
**10.10.90 Patentblatt 90/41**

(84) Benannte Vertragsstaaten:
**AT DE FR GB IT**

(71) Anmelder: **Herberts Gesellschaft mit
beschränkter Haftung
Christbusch 25
D-5600 Wuppertal 2(DE)**

(72) Erfinder: **Bastian, Udo, Dr.
Backhausfeld 25
D-4030 Ratingen 1(DE)**
Erfinder: **Blum, Joachim, Dr.
Ueberfelder Strasse 8
D-5630 Remscheid 1(DE)**

(74) Vertreter: **Türk, Gille, Hrabal
Brucknerstrasse 20
D-4000 Düsseldorf 13(DE)**

(54) **Verfahren zur Entsorgung von ungesättigte, radikalisch polymerisierbare Verbindungen enthaltenden wässrigen Systemen.**

(57)

2.1 Radikalisch polymerisierbare Rückstände in wäßrigen Systemen mußten bisher durch Lösungsmittelzusatz und Verbrennung in Gegenwart des wäßrigen Mediums entsorgt werden. Das neue Verfahren soll einen geringen energetischen und apparativen Aufwand erfordern und deren quantitative Entfernung ermöglichen.

2.2 Aus wäßrigen Systemen werden ungesättigte , radikalisch polymerisierbare Verbindungen durch Redoxpolymerisation entsorgt. Die ungesättigten Verbindungen werden in hochmolekulare Produkte übergeführt, die leicht abgetrennt werden können.

2.3 Beseitigung von radikalisch polymerisierbaren Beschichtungsmittelabfällen.

## Verfahren zur Entsorgung von ungesättigte, radikalisch polymerisierbare Verbindungen enthaltenden wäßrigen Systemen

Die Erfindung betrifft ein Verfahren zur Entsorgung von ungesättigte, radikalisch polymerisierbare Verbindungen enthaltenden wäßrigen Systemen. Insbesondere können ungesättigte, strahlenhärtbare, radikalisch polymerisierbare Verbindungen, die beispielsweise als Beschichtungsmittelabfälle in wäßrigen Systemen auftreten, aus derartigen wäßrigen Systemen beseitigt werden.

Aufgrund der immer mehr in den Vordergrund tretenden Umweltschutzgesetze gewinnen wäßrige Beschichtungsmittel einen immer größeren Marktanteil. Dies ist auch der Fall bei den lösemittelarmen oder lösemittelfreien, strahlenhärtbaren, ungesättigten, radikalisch polymerisierbaren Systemen,deren meist sehr hohe Viskosität durch Wasser mit entsprechenden Additiven verringert werden kann. Hieraus resultiert die Problematik, die beim Umgang mit diesen umweltfreundlichen Systemen entstehenden Abfälle ebenfalls umweltfreundlich zu entsorgen. So entstehen z. B. bei der Spritzapplikation herkömmlicher Beschichtungssysteme (lösemittelhaltig) oder wäßriger gesättigter Systeme Abfälle in Form von Overspray und sonstigen Lackresten. Diese können problemlos durch Koagulierungsmittel aus der wäßrigen Phase ausgefällt werden. Gegebenenfalls lassen sich diese Koagulatpartikel mit hochmolekularen Fällungshilfsmitteln z. B. auf Basis von Polyacrylamid zusätzlich vergrößern. Es entsteht ein nicht reaktiver Polymerrückstand.

Anders verhalten sich ungesättigte, strahlenhärtbare radikalisch polymerisierbare Verbindungen. Bei Zugabe von Koagulierungsmitteln oder Flockungshilfsmitteln zu wäßrigen Emulsionen dieser Systeme tritt aufgrund des Monomeren- und/oder Prepolymerengehalts eine nicht quantitative Trennung der organischen und der wäßrigen Phase ein. Ein weiterer Nachteil ist, daß die reaktiven ungesättigten Gruppen dieser Systeme nach wie vor vorhanden sind und weitere Reaktionen verursachen können. Ferner stellen diese ungesättigten Monomeren und Prepolymeren gesundheitsschädliche und stark umweltbelastende Stoffe dar. Man hat daher bisher versucht auf derartigen Materialien basierende wäßrige Systeme durch Verbrennung zu beseitigen. Dies erfordert den weiteren Zusatz brennbarer Lösemittel, einen hohen Energieaufwand sowie aufwendige Apparaturen.

Aufgabe der Erfindung ist die Bereitstellung eines Verfahrens zur Entsorgung von ungesättigten, radikalisch polymerisierbaren Verbindungen aus wäßrigen Systemen, das bei geringem Energie- und Apparaturaufwand zu einer praktisch quantitativen Beseitigung derartiger Materialien aus wäßrigen Systemen führt.

Gelöst wird diese Aufgabe durch ein Verfahren des eingangs definierten Gattungsbegriffs, das dadurch gekennzeichnet ist, daß die ungesättigten, radikalisch polymerisierbaren Verbindungen durch Redoxpolymerisationen in den wäßrigen Systemen in hochmolekulare Produkte übergeführt und diese aus den wäßrigen Systemen abgetrennt werden. Die Redoxpolymerisation kann beispielsweise bei Temperaturen von 0 bis 80°C, bevorzugt bei Raumtemperatur, durchgeführt werden.

Das erfindungsgemäße Verfahren bietet den Vorteil, daß ungesättigte, radikalisch polymerisierbare Verbindungen, die häufig als Rückstände in wäßrigen Beschichtungsmittelabfällen verbleiben, in hochmolekulare Produkte übergeführt werden können, die sich praktisch wie Festkörper verhalten und daher leicht aus den wäßrigen Systemen abgetrennt werden können. Da eine Redoxpolymerisation praktisch quantitativ durchgeführt werden kann, kann eine quantitative Ausfällung mit beispielsweise anschließender Filtration erfolgen, ohne daß weitere Maßnahmen (wie eine Verbrennung) zur Beseitigung ungesättigter, radikalisch polymerisierbarer Rückstände aus wäßrigen Systemen notwendig sind. Durch die Erfindung wird somit ein umweltfreundliches Verfahren zur Beseitigung von beim Umgang mit ungesättigten, radikalisch polymerisierbaren Systemen anfallenden Abfällen bereitgestellt. Derartige Abfälle fallen insbesondere beim Umgang mit strahlenhärtbaren Systemen an.

Durch die erfindungsgemäße Verfahrensweise können ungesättigte, radikalisch polymerisierbare Verbindungen aus wäßrigen Systemen beseitigt werden. Ungesättigte, radikalisch polymerisierbare Verbindungen, wie sie insbesondere auf dem Beschichtungsmittelsektor insbesondere als strahlenhärtbare Verbindungen angewendet werden, können beispielsweise sein (meth)acrylisch und/oder vinylisch ungesättigte Monomere, Oligomere, Polymere, Copolymere und/oder Kombinationen davon. Die Verbindungen können mehrfach ungesättigt sein sowie auch andere funktionelle Gruppen enthalten. Beispiele für ungesättigte Monomere sind Butyl(meth)acrylat, Dipropylenglykoldi(meth)acrylat, Trimethylolpropantri(meth)acrylat. Beispiele für Oligomere bzw. Prepolymere sind (meth)acrylfunktionelle (Meth)acrylcopolymere, Epoxidharz-(meth)acrylate, z. B. Umsetzungsprodukte aus 2 Mol (Meth)acrylsäure und handelsüblichen Epoxidharzen, wie z.B. Epikote 828, Polyester(meth)acrylate, Polyether(meth)acrylate, Urethan(meth)acrylate, Amin(meth)-acrylate, ungesättigte Polyester, ungesättigte Polyurethane, Silicon(meth)acrylate oder Kombinationen davon. Es können praktisch sämtliche ungesättigte, radikalisch polymerisierbare Oligomere beseitigt werden, insbesondere solche, die strahlenhärtbar sind. Es können bespielsweise auch Kombinationen aus carboxylgruppenhaltigen,ungesättigten Polymeren, die durch Neutralisation mit Aminen wasserverdünnbar werden,mit ungesättigten Monomeren, wie z.B. Trimethylolpropantriacrylat beseitigt werden.

Die in den wäßrigen Systemen als Abfälle enthaltenen Monomeren und/oder Oligomeren können wasserverdünnbar sein. Sie können also z.B.wasserlöslich sein, in Wasser dispergierbar sein, gegebenenfalls unter Zuhilfenahme von externen Emulgatoren. Sie bilden im wäßrigen System eine homogene Mischung mit dem Wasser ,beispielsweise in Form einer Dispersion von Flüssigkeitströpfchen in Wasser.

Durch die erfindungsgemäße Verfahrensweise wird die homogene Verteilung in der wäßrigen Phase aufgehoben durch Bildung höhermolekularer Produkte, die beispielsweise als Feststoffe abgeschieden und entsorgt werden können.

Die Bildung der höhermolekularen Produkte erfolgt durch Redoxpolymerisation. Es handelt sich hierbei um die dem Fachmann geläufige Polymerisation in Gegenwart von durch Redoxsysteme erzeugten Radikalen. Zur Redoxpolymerisation werden vorwiegend Peroxide in Gegenwart von Reduktionsmitteln eingesetzt.

Als für die erfindungsgemäße Verfahrensweise geeignete Peroxide kommen beispielsweise in Frage: Wasserstoffperoxid (beispielsweise als 30%ige Lösung, die jedoch vor dem Einsatz verdünnt werden kann), Peroxodisulfate, wie Alkali- oder Ammoniumperoxodisulfate, Persulfate, beispielsweise Alkali- oder Ammoniumpersulfate, Perborate, wie Alkaliperborate, Alkali- oder andere Metallperoxide und organische Peroxide, die beispielsweise als Radikalinitiatoren in der Kunststoffindustrie üblich sind; Beispiele sind Peroxide,wie Di-t-butylperoxid, Dibenzoylperoxid, Peroxocarbonsäuren, wie Peroxoessigsäure, Peroxodicarbonate, wie Di-sec-butyl-peroxodicarbonat, Peroxidester, wie 2-Ethylhexansäure-tert.-butyl-perester, Hydroperoxide, wie Cumolperoxid und Ketonperoxide, wie Methyl-ethyl-keton-peroxid. Die Peroxoverbindungen werden insbesondere in in Wasser gelöster oder dispergierter bzw. emulgierter Form dem Reaktionssystem zugesetzt.

Aus dem Peroxid werden durch Zusatz von Reduktionsmitteln Radikale gebildet, die als Initiatoren der radikalischen Polymerisation wirken. Geeignete Reduktionsmittel sind beispielsweise reduzierende wasserlösliche Metallsalze in ihren niedrigen Wertigkeitsstufen wie Eisen-II- oder Cobalt-II- oder Kupfer-I-Salze, z.B. Eisen-II-chlorid (z.B. als Tetrahydrat); reduzierende Stickstoffverbindungen, wie Hydroxylamin, Hydrazin und ihre Derivate, z. B. Natriumhydrazomethandisulfonat, aber auch Amine wie beispielsweise N,N-Diethylanilin,N,N-Dimethylanilin, N-Phenyldiethanolamin oder Trihexylamin; Schwefel enthaltende Verbindungen, wie beispielsweise Schwefeldioxid, Sulfite, Hydrogensulfite, Disulfite, Dithionite, Thiosulfate, Sulfoxylate, Formamidinsulfinsäure, Schwefelwasserstoff, Mercaptane, Thiophenole und ihre Salze; Phosphite, wie Natriumhypophosphit; und organische reduzierende Verbindungen, wie z.B. solche mit der Endiol-Gruppierung, beispielsweise Ascorbinsäure, Dihydroxymaleinsäure; und organische Sulfinsäuren.

Ein Vorteil der erfindungsgemäßen Verfahrensweise liegt darin, daß es ausreicht, die zur Einleitung der Redoxpolymerisation benötigten Peroxide und Reduktionsmittel in relativ geringen Mengen einzusetzen. Es genügen beispielsweise katalytische Mengen, wobei jedoch auch größere Mengen eingesetzt werden können. Es genügen beispielsweise 0,01 Gew.-% Peroxid (berechnet als reines Peroxid) bezogen auf den aus dem wäßrigen System zu beseitigenden nicht-wäßrigen Abfall-Anteil, der neben den unge sättigten,radikalisch polymerisierbaren Verbindungen auch weitere nicht-wäßrige, nicht-reaktive Anteile enthalten kann.

Die Peroxidmenge kann beispielsweise bis zu 50 Gew.-%, bezogen auf den gesamten nicht-wäßrigen Anteil betragen. In der Praxis liegt die Obergrenze bevorzugt bei bis zu etwa 10 Gew.-%. Besonders bevorzugt werden 0,3 bis 5 Gew.-% Peroxid eingesetzt.

Die Reduktionsmittelmenge kann entsprechend der Peroxidmenge gering gehalten werden. Sie hängt im Prinzip von der Menge des eingesetzten Peroxids , der Art des Peroxids und der Art des Reduktionsmittels ab. Es können beispielsweise geringe Mengen von 0,001 Gew.-%, wiederum bezogen auf den zu beseitigenden nicht-wäßrigen Anteil eingesetzt werden. Die Obergrenze kann bei bis zu beispielsweise 50 Gew.-% liegen. In der Praxis liegt die untere Grenze bevorzugt bei 0,01, besonders bevorzugt bei 0,05 Gew.-% Reduktionsmittel, die obere Grenze bevorzugt bei 10, besonders bevorzugt bei 5 Gew.-% Reduktionsmittel.

Zur Durchführung des erfindungsgemäßen Verfahrens wird dem zu reinigenden wäßrigen System das Redoxsystem in der gewünschten Menge zugesetzt. Bevorzugt wird zunächst das Peroxid zugesetzt, worauf mit dem Reduktionsmittel versetzt wird. Es ist jedoch auch möglich, das Reduktionsmittel zuerst und dann das Peroxid zuzufügen bzw. beide gleichzeitig in das wäßrige System einzuführen. Es ist günstig, jedoch nicht notwendig, das System zu homogenisieren,beispielsweise durch kurzes Rühren. Anschließend kann das System ruhen,worauf nach Reaktionszeiten von 1. Sek. bis zu 1 Woche, je nach eingesetzter Menge an Peroxid, Reduktionsmittel, Temperatur und vorhandenem zu beseitigendem Material, ein höhermolekulares Produkt ausfällt. Im allgemeinen sind die Reaktionszeiten sehr kurz, d.h. nach dem Vermischen des Peroxid/Reduktionsmittel-Systems mit dem zu reinigenden wäßrigen System fällt sofort ein filtrierbarer Festkörper aus.

Ein Zusatz von üblichen Fällungsmitteln oder Filterhilfsmitteln, wie z.B. Kieselgel, kann in Einzelfällen von Vorteil sein.

Wie eingangs festgestellt, können durch die erfindungsgemäße Verfahrensweise ungesättigte,radikalisch polymerisierbare Verbindungen aus wäßrigen Systemen umweltfreundlich entfernt werden. Derartige ungesättigte, radikalisch polymerisierbare Verbindungen liegen insbesondere in Beschichtungsmaterialien vor. Besonders interessant ist die erfindungsgemäße Verfahrensweise dementsprechend für die Anwendung auf wäßrige Systeme, die derartige Beschichtungsmittelabfälle enthalten, insbesondere wenn es sich dabei um solche Materialien handelt, die strahlenhärtbare Beschichtungsmittelabfälle aufweisen.

Es hat sich gezeigt, daß die erfindungsgemäße Verfahrensweise anwendbar ist auf Systeme, die im nicht-wäßrigen zu entfernenden Anteil bis zu 100 Gew.-% der ungesättigten, radikalisch polymerisierbaren Verbindungen enthalten.

Im Fall von Bindemitteln, beispielsweise strahlenhärtbaren Bindemitteln, können häufig neben den radikalisch polymerisierbaren Bestandteilen jedoch auch weitere Bestandteile vorliegen, wie Photoinitiatoren, nicht-reaktive Polymere,Emulgatoren und andere Bestandteile, wie Pigmente und übliche Additive. Es hat sich überraschenderweise gezeigt, daß durch die erfindungsgemäße Verfahrensweise auch derartige radikalisch nicht-polymerisierbare Anteile aus dem wäßrigen System in umweltfreundlicher Weise entfernt werden können. Bei der Bildung der hochmolekularen Produkte aus den radikalisch polymerisierbaren Anteilen werden derartige nicht-reaktive Materialien mit in das Polymerisat eingeschlossen, so daß auch diese ausgefällt werden. Bindemittelreste in wäßrigen Systemen, die durch die erfindungsgemäße Verfahrensweise beseitigt werden können, können beispielsweise bis zu 20 Gew.-% Photoinitiatoren enthalten, wobei es sich um übliche ,dem Fachmann bekannte Initiatoren handelt und diese auch ungesättigte Gruppen enthalten können, die in das zu bildende Polymere eingebaut werden können, was jedoch kein Erfordernis darstellt.

Die Bindemittelmaterialien können auch bis zu 60 Gew.-% nicht-reaktive Polymere aufweisen, die häufig den Beschichtungsmitteln zugesetzt werden, um deren Eigenschaften, wie z.B. die Haftung am Substrat zu modifizieren. Emulgatoren können beispielsweise in Mengen bis zu 20 Gew.-% vorliegen, wobei es sich um ein oder mehrere Emulgatoren handeln kann. Derartige Emulgatoren können über reaktive Gruppen in das auszufällende Polymere eingebaut werden, was jedoch nicht notwendig ist. Im allgemeinen enthalten die ausfällbaren Bindemittel bis zu 30 Gew.-% anderer Bestandteile, wie Pigmente und/oder lacklübliche Additive. Die genannten Gewichtsprozente beziehen sich jeweils auf die Summe der gesamten vorhandenen zu entfernenden, nicht-wäßrigen Anteile.

Die durch das erfindungsgemäße Verfahren zu behandelnden wäßrigen Systeme können bis zu 90 Gew.-% nicht-wäßrige Anteile enthalten, wobei diese nicht-wäßrigen Anteile durch die radikalisch polymerisierbaren Anteile sowie gegebenenfalls weitere Anteile, wie vorstehend erwähnt, Photoinitiatoren, nicht-reaktive Polymere, Emulgatoren usw. gebildet werden. Die untere Grenze der nicht-wäßrigen Anteile kann beispielsweise bei 0,01 Gew.-% liegen. Bevorzugt liegt der Anteil an nicht-wäßrigen Materialien bei 0,1 bis 60 und besonders bevorzugt bei 1 bis 30 Gew.-%. Ein Anteil von 1 bis 30 Gew.-% ist deshalb besonders bevorzugt, da hier bei der exotherm verlaufenden Redoxpolymerisation praktisch keine Erwärmung des zu reinigenden Systems auftritt. Bei höheren Konzentrationen muß so gearbeitet werden, daß lokale Überhitzungen vermieden werden, was beispielsweise durch Rühren, Verdünnen oder Kühlen erzielt werden kann. Der Anteil an radikalisch polymerisierbarem Material liegt bevorzugt bei bis zu 30 Gew.-%, besonders bevorzugt bis zu 20 Gew.%, bezogen auf das gesamte wäßrige System.

Durch die erfindungsgemäße Verfahrensweise wird es möglich, ungesättigte, beispielsweise strahlenhärtbare, radikalisch polymerisierbare Abfälle durch Redoxpolymerisation bzw. Redoxcopolymerisation dieser in Wasser gelösten oder dispergierten, insbesondere emulgierten ungesättigten Materialien sowie übliche Bindemittel-Additive unter Verwendung geringer Mengen an Peroxiden und Reduktionsmitteln zu beseitigen. Die Entsorgung erfolgt umweltfreundlich, da nur geringe Mengen an Peroxiden und Reduktionsmitteln erforderlich sind. Besonders bevorzugt ist der Einsatz solcher Peroxide und Reduktionsmittel, die zu umweltfreundlichen Abbau-Produkten führen, wie beispielsweise der Einsatz von Wasserstoffperoxid als Peroxid und von organischen Reduktionsmitteln, wie Ascorbinsäure als Reduktionsmittel, da derartige Materialien selbst keine umweltschädlichen Produkte bilden.

Beim erfindungsgemäßen Verfahren werden polymere Produkte gebildet, die eine quantitative Abtrennung der unerwünschten Materialien aus wäßrigen Systemen ermöglichen. Die erhaltenen Polymeren weisen keine ungesättigten Gruppen auf und sind auch hierdurch umweltfreundlich.

Die Abtrennung der erhaltenen Polymeren bzw. höhermolekularen Produkte aus den wäßrigen Systemen erfolgt beispielsweise durch Filtrieren (beispielsweise in üblichen Filterpressen) oder Dekantieren. Die

4

Filtrate sind klar und können gegebenenfalls nach Entfernung weiterer löslicher Verunreinigungen abgeführt werden. Die erhaltenen polymeren Materialien ermöglichen eine gute Abtrennung aus den wäßrigen Systemen und können problemlos gelagert, verbrannt oder beispielsweise industriell weiterverwertet werden. Die Verbrennung hat den Vorteil, daß sie in Abwesenheit von Wasser ohne zusätzlichen Lösungsmittelzusatz erfolgen kann.

Die folgenden Beispiele dienen zur Erläuterung der Erfindung. Prozentangaben beziehen sich,sofern nicht anders angegeben, auf das Gewicht.

Beispiel 1:

Eine Emulsion mit 60% Festkörper bestehend aus
94 % Polyesteracrylat, radikalisch polymerisierbar
3 % 2-Hydroxy-2-methylpropiophenon (Photoinitiator)
3 % Emulgator
wird mit deionisiertem Wasser auf einen Festkörpergehalt von 10% verdünnt. 20 g dieser Emulsion werden mit den in den Tabellen 1 bis 3 genannten Mengen an 30%igem Wasserstoffperoxid, Eisen(II)chlorid bzw. Ascorbinsäure (jeweils gelöst in 2ml Wasser) versetzt und die Zeit bis zur vollständigen Polymerisation bestimmt. Die Vollständigkeit der Polymerisation ist dann erzielt, wenn das Filtrat des Ansatzes klar wird.

Tabelle 1:

|  | 500 mg 30% $H_2O_2$ | vollständige Polymerisation nach |
|---|---|---|
| plus | 100 mg $FeCl_2.4H_2O$<br>50 mg $FeCl_2.4H_2O$<br>20 mg $FeCl_2.4H_2O$<br>5 mg $FeCl_2.4H_2O$ | 30 Minuten<br>30 Minuten<br>2 Tagen<br>1 Woche |

Tabelle 2:

|  | 500 mg 30 % $H_2O_2$ | vollständige Polymerisation nach |
|---|---|---|
| plus | 200 mg Ascorbinsäure<br>100 mg Ascorbinsäure<br>50 mg Ascorbinsäure<br>20 mg Ascorbinsäure | 2 Stunden<br>10 Stunden<br>1 Tag<br>1 Tag |

Tabelle 3:

|  | 20 mg 30% $H_2O_2$ | vollständige Polymerisation nach |
|---|---|---|
| plus | 50 mg Ascorbinsäure<br>20 mg Ascorbinsäure<br>10 mg Ascorbinsäure | 1 Tag<br>2 Tagen<br>5 Tagen |

Beispiel 2:

Die in Beispiel 1 genannte 60%ige Emulsion wird auf 30% Festkörper mit deionisiertem Wasser verdünnt. 200 g dieser Emulsion werden mit 5 g 30%igem $H_2O_2$ und 500 mg $FeCl_2.4H_2O$ (gelöst in 2 ml Wasser) versetzt. Nach 20 Minuten ist die Reaktion beendet (das Filtrat wird dann klar).

Beispiel 3:

Eine Emulsion mit 60% Festkörper bestehend aus
3 % Photoinitiator (wie im Beispiel 1)
3 % Emulgator
25 % Butylacrylat
30 % Hexandioldiacrylat
10 % Trimethylolpropantriacrylat
29 % nicht-reaktivem Polymer (OH-funktionelles Acrylcopolymer)
wird mit deionisiertem Wasser auf einen Festkörper von 10 % verdünnt.

20 g dieser Emulsion werden mit den in den Tabellen 4 bis 8 genannten Mengen an 30%igem Wasserstoffperoxid, Eisen(II)chlorid bzw. Ascorbinsäure versetzt und die Zeit bis zur vollständigen Polymerisation analog Beispiel 1 bestimmt.

Tabelle 4:

|  | 500 mg 30 % $H_2O$ | vollständige Polymerisation nach |
|---|---|---|
| plus | 100 mg $FeCl_2.4H_2O$ | 1 Sekunde |
|  | 50 mg $FeCl_2.4H_2O$ | 1 Sekunde |
|  | 20 mg $FeCl_2.4H_2O$ | 1 Sekunde |
|  | 10 mg $FeCl_2.4H_2O$ | 1 Sekunde |
|  | 1 mg $FeCl_2.4H_2O$ | 1 Woche |

Tabelle 5:

|  | 100 mg $FeCl_2.4H_2O$ | vollständige Polymerisation nach |
|---|---|---|
| plus | 200 mg 30% $H_2O_2$ | 1 Sekunde |
|  | 100 mg 30% $H_2O_2$ | 1 Sekunde |
|  | 50 mg 30% $H_2O_2$ | 1 Sekunde |
|  | 20 mg 30% $H_2O_2$ | 1 Sekunde |

Tabelle 6:

|  | 30 mg 30% $H_2O_2$ | vollständige Polymerisation nach |
|---|---|---|
| plus | 10 mg $FeCl_2.4H_2O$ | 1 Stunde |
|  | 5 mg $FeCl_2.4H_2O$ | 2 Stunden |

Tabelle 7:

|  | 500 mg 30% $H_2O_2$ | vollständige Polymerisation nach |
|---|---|---|
| plus | 200 mg Ascorbinsäure<br>100 mg Ascorbinsäure<br>50 mg Ascorbinsäure<br>20 mg Ascorbinsäure | 1 Tag<br>2 Tagen<br>4 Tagen<br>1 Woche |

Tabelle 8:

|  | 30 mg 30% $H_2O_2$ | vollständige Polymerisation nach |
|---|---|---|
| plus | 50 mg Ascorbinsäure<br>20 mg Ascorbinsäure | 5 Tagen<br>1 Woche |

Beispiel 4:

200 g der in Beispiel 3 genannten Emulsion mit 60% Festkörper werden mit 2 g 30%igem Wasserstoffperoxid und 1 g Eisen(II)chlorid-Tetrahydrat (gelöst in 4 ml Wasser) versetzt. Nach 10 Minuten ist die Polymerisation beendet, wobei eine starke Wärmeentwicklung auftritt.

Beispiel 5:

20 g der in Beispiel 3 genannten Emulsion (10 % Festkörper) werden mit 200 mg Ammoniumperoxodisulfat (gelöst in 2 ml Wasser) und 50 mg Eisen(II)chlorid-Tetrahydrat (gelöst in 2 ml Wasser) versetzt. Nach 30 Sekunden ist die Polymerisation beendet (Filtrat klar).

Beispiel 6:

Eine Emulsion mit 60% Festkörper bestehend aus
3% Photoinitiator (wie im Beispiel 1)
3% Emulgator,
64% einer Mischung verschiedener Epoxidharzacrylate (radikalisch polymerisierbar)
10% eines COOH-funktionellen, ungesättigten Acrylatcopolymeren
20% Hexandioldiacrylat
wird mit deionisiertem Wasser auf 10% Festkörper verdünnt.

20 g dieser Emulsion werden mit den in den Tabellen 9 und 10 genannten Mengen 30%igem Wasserstoffperoxid und Ascorbinsäure (gelöst in 2 ml Wasser) versetzt und die Zeit bis zu vollständigen Polymerisation (Filtrat wird klar) bestimmt.

Tabelle 9:

|  | 50 mg 30% $H_2O_2$ | vollständige Polymerisation nach |
|---|---|---|
| plus | 50 mg Ascorbinsäure<br>20 mg Ascorbinsäure<br>10 mg Ascorbinsäure | 5 Stunden<br>2 Tagen<br>5 Tagen |

Tabelle 10:

|  | 20 mg 30% $H_2O_2$ | vollständige Polymerisation nach |
|---|---|---|
| plus | 50 mg Ascorbinsäure<br>20 mg Ascorbinsäure<br>10 mg Ascorbinsäure | 5 Stunden<br>2 Tagen<br>5 Tagen |

Beispiel 7:

20 g handelsübliches wäßriges radikalisch polymerisierbares Polyesteracrylat (Laromer® PE 55 W der BASF) werden auf 20 % Festkörper mit deionisiertem Wasser verdünnt und mit den in den Tabellen 11 und 12 genannten Mengen 30 %igem Wasserstoffperoxid, Eisen(II)chlorid bzw. Ascorbinsäure (jeweils gelöst in 2 ml Wasser) versetzt und die Zeit bis zur vollständigen Polymerisation (Filtrat wird klar) bestimmt.

Tabelle 11:

|  | 150 mg 30% $H_2O_2$ | vollständige Polymerisation nach |
|---|---|---|
| plus | 100 mg $FeCl_2.4H_2O$<br>50 mg $FeCl_2.4H_2O$<br>20 mg $FeCl_2.4H_2O$ | 1 Minute<br>2 Minuten<br>10 Minuten |

Tabelle 12:

|  | 150 mg 30% $H_2O_2$ | vollständige Polymerisation nach |
|---|---|---|
| plus | 100 mg Ascorbinsäure<br>50 mg Ascorbinsäure<br>20 mg Ascorbinsäure | 1 Tag<br>2 Tagen<br>3 Tagen |

EP 0 391 147 A2

**Ansprüche**

1. Verfahren zur Entsorgung von ungesättigte, radikalisch polymerisierbare Verbindungen enthaltenden wäßrigen Systemen,

**dadurch gekennzeichnet,**

daß man die ungesättigten Verbindungen durch Redoxpolymerisation in den wäßrigen Systemen in hochmolekulare Produkte überführt und diese aus den wäßrigen Systemen abtrennt.

· 2. Verfahren nach Anspruch 1, dadurch gekennzeichnet, daß man die ungesättigten Verbindungen in den wäßrigen Systemen durch Zusatz eines Peroxids und eines Reduktionsmittels radikalisch polymerisiert und die erhaltenen hochmolekularen Produkte aus den wäßrigen Systemen abtrennt.

3. Verfahren nach Anspruch 1 oder 2, dadurch gekennzeichnet, daß die ungesättigten Verbindungen Beschichtungsmittelabfälle in wäßrigen Systemen sind.

4. Verfahren nach Anspruch 2 oder 3, dadurch gekennzeichnet, daß man als Peroxid Wasserstoffperoxid oder ein Peroxodisulfat einsetzt.

5. Verfahren nach Anspruch 2, 3 oder 4, dadurch gekennzeichnet, daß man als Reduktionsmittel ein reduzierendes Metallsalz oder eine reduzierende organische Verbindung verwendet.

6. Verfahren nach einem der Ansprüche 2 bis 5, dadurch gekennzeichnet, daß das Peroxid und das Reduktionsmittel jeweils in katalytischen Mengen zugesetzt werden.

7. Verfahren nach einem der vorhergehenden Ansprüche, dadurch gekennzeichnet, daß die Abtrennung der gebildeten hochmolekularen Produkte aus dem wäßrigen System durch Filtration, Dekantieren oder Zentrifugieren erfolgt.

9